# EUROPEAN PATENT APPLICATION

(11) **EP 3 061 902 A1**
(43) Date of publication of application: **31.08.2016**
(21) Application number: 15156804.5
(22) Date of filing: 26.02.2015
(51) Int. Cl.: E21B 47/00, G01N 21/954

(54) **Underground structure inspection system and method**

(71) Applicant: Alan Auld Engineering Limited, Doncaster, South Yorkshire DN1 2DY (GB)
(72) Inventor: Hopkins, Sean, Saskatchewan, S0K 1K0 (CA)
(74) Representative: Appleyard Lees IP LLP

(57) **Abstract**

A system (100) for inspecting an underground structure and a method of inspecting an underground structure, for example a shaft, tunnel or excavation, is provided. The system comprises a memory (120) configured to store a plurality of images captured whilst moving along a predetermined path through the underground structure, a position determination module (130) configured to generate position data associating each of the stored images with a position on the predetermined path, and a user terminal (140) configured to receive a user input specifying a position on the predetermined path and to display at least one of the stored images corresponding to the specified position based on the position data. Accordingly, the user may retrieve and inspect images of the underground structure, based on the position at which the image was captured therein.

## Description

### FIELD OF THE INVENTION

This invention relates to underground structure inspection systems and methods. Particularly, this invention relates to systems and methods for inspecting underground structures such as shafts, tunnels and mass excavations.

### BACKGROUND OF THE INVENTION

A great many complex underground structures exist in the world today, having shafts extending several thousand metres deep and possessing tunnels extending over even longer distances.

There is often a need to survey and inspect such structures. For instance, such structures usually have a long history and often plans and construction details may become lost or misplaced. When alterations and repairs have been made over many years and the owner of the structure does not have the specialist knowledge needed to make objective decisions on repair and maintenance, a need to establish the current extent of the structure arises. Equally, a need to survey a structure may arise during construction, or with a view to establishing the current state of the structure.

Historically, these structures have been inspected manually, by sending a human into the mine to visually assess the structure, photograph, sketch, make notes and take relevant measurements. However, it is inherently difficult to inspect the space safely, because there is often little or no lighting, the tunnels/shafts/excavations may not be appropriately sized/equipped to easily allow humans to move around the shafts, tunnels or excavations, the plans on which the inspector relies for navigation may be out of date and so on. In some instances, the dangers are exacerbated by the nature of the structure itself. For example, the inspection of a uranium mine provides serious risks to the safety of any inspector. In other examples, underground shafts, tunnels or excavations may be structurally in poor condition. Furthermore, the time available to carry out inspections may be restricted due to production constraints, which can affect the quality and/or detail of the inspection work.

Consequently, there is a need for systems and methods which allow for the rapid, reliable and repeatable inspections of underground structures which would be too costly or dangerous to inspect manually.

In one example, underground spaces have been surveyed with laser range-finding systems, which generate a 360° model of the space. However, whilst such systems can accurately map out the dimensions of the space, they fail to capture the highly useful visual information which is required to properly inspect and survey an underground structure. Furthermore, equipment involved in such systems is expensive and fragile, and the processing, navigation and display of the resulting model is computationally expensive.

It is an aim of the present invention to address at least some of the above difficulties, or other difficulties which will be appreciated from the description below. It is a further aim of the present invention to provide convenient, cost effective and accurate systems and methods for surveying the interior of underground structures.

### SUMMARY OF THE INVENTION

According to a first aspect of the invention, there is provided a system for inspecting an underground structure, comprising:
a memory configured to store a plurality of images captured whilst moving along a predetermined path through the underground structure;
a position determination module configured to generate position data associating each of the stored images with a position on the predetermined path, and
a user terminal configured to receive a user input specifying a position on the predetermined path and to display at least one of the stored images corresponding to the specified position based on the position data.

Preferably, the system comprises an image capture apparatus configured to capture the plurality of images whilst moving along the predetermined path through the underground structure. Preferably, the image capture apparatus comprises a camera and an illumination unit. Preferably, the camera comprises at least one lens preferably arranged to capture a 360 degree image of a portion of the underground structure. More preferably, the camera comprises a plurality of lenses. Preferably, the camera is configured to capture the plurality of images at predetermined time intervals whilst the image capture apparatus moves along the predetermined path, preferably a plurality of 360 degree images

Preferably, the image capture apparatus comprises a conveying means configured to convey the image capture apparatus along the predetermined path. Preferably, the conveying means comprises a conveying line and at least one mounting portion, wherein the mounting portion is arranged to attach the camera and the illumination unit to the conveying line. Preferably, the camera and the illumination unit are attached to the conveying means so that they travel in unison.

Preferably, the image capture apparaus comprises a camera control unit configured to receive and store the plurality of images captured by the camera. Preferably, the camera control unit is a computer encased in a waterproof housing. Preferably, the camera control unit is configured to control the speed at which the image capture unit is conveyed along the predetermined path. More preferably, the image capture apparatus comprises a control terminal coupled to the camera control unit, so as to allow for remote operation of the image capture apparatus.

Preferably, the position determination module is configured to generate position data by user inspection of the images. Preferably, a plurality of position markers are arranged within the underground structure, and a user identifies the position marker shown in an image and records the associated position in the position data. Preferably, the position determination module further comprises a software user interface, configured to record the associated position identified by the user. Preferably, the position data comprises a distance from a start point of the predetermined path.

Alternatively, the position determination module is configured to generate the position data using a sensor configured to measure the distance by which the image capture apparatus has travelled along the predetermined path.

Preferably, the position determination module is configured to generate position data for a subset of the captured images, and to extrapolate position data for a remainder of the captured images based on the position data of the subset of the captured images. Preferably, the extrapolation is based on the speed at which the image capture apparatus travelled through the underground structure. Alternatively, the extrapolation is based on the time elapsed between a start time, at which the image capture apparatus began moving along the predetermined path, and a time at which each image was captured.

Preferably, the memory is configured to store a plurality of items of inspection data, and the user terminal is configured to display at least one of the plurality of items of inspection data. Preferably, the inspection data comprises images and/or information relevant to the inspection of the underground structure. Preferably, inspection data comprises one or more of: images of previous inspections, maintenance records, drawings, plans and geological information or the like. Preferably, the memory is configured to store inspection position data associating each item of inspection data with its respective position on the predetermined path, and the user terminal is configured to display one or more items of inspection data corresponding to the specified position. Preferably, the user terminal is configured to display the inspection data and the captured images concurrently.

Preferably, the user terminal stores inspection software configured to allow a user to inspect the captured images. Preferably, the inspection software is operable to generate an image viewing pane to display the at least one stored image and a distance selection means configured to receive the user input. Preferably, the inspection software is further operable to generate an inspection data viewing pane configured to allow a user to inspect the items of inspection data.

Preferably, the underground structure inspection system comprises a video generation module, configured to generate a video from the stored images and store the generated video in the memory. Preferably, the video processing module is configured to combine a plurality of simultaneously captured images into a single 360° image. More preferably, the video generation module is configured to generate an interactive video, in which a viewpoint of the user may be moved during playback. Preferably, the interactive video may be generated by stretching the captured images over an imaginary dome-like surface using a video processing algorithm. Preferably, the user terminal is configured to display the generated video. More preferably, the image viewing pane of the inspection software is further configured to display the generated video. Preferably, the software is operable to change the viewpoint of the user in the interactive video based on a second user input.

According to a second aspect of the invention, there is provided a method of inspecting an underground structure, comprising:
generating position data for each of a plurality of stored images captured along a predetermined path through the underground structure, the position data comprising the position on the predetermined path at which each respective image was captured;
receiving a user input specifying a position on the predetermined path, and
displaying at least one stored image corresponding to the specified position based on the position data.

Preferably, the method further comprises storing a plurality of items of inspection data. Preferably, the inspection data comprises images and/or information relevant to the inspection of the underground structure. Preferably, the method further comprises storing inspection position data associating each item of inspection data with its respective position on the predetermined path, and displaying at least one of the plurality of items of inspection data corresponding to the specified position.

Preferably, the method further comprises capturing the plurality of images along the predetermined path through the underground structure.

Further preferred features of the components required in the method of the second aspect are defined hereinabove in relation to the first aspect and may be combined in any combination.

According to a third aspect of the invention, there is provided a computer-readable storage medium having computer-executable components which when executed cause a computing device to perform the method of the second aspect of the invention.

Further preferred features of the components required in the computer-readable medium of the third aspect are defined hereinabove in relation to the first and second aspects and may be combined in any combination.

### BRIEF DESCRIPTION OF THE DRAWINGS

For a better understanding of the invention, and to show how embodiments of the same may be carried into effect, reference will now be made, by way of example, to the accompanying diagrammatic drawings in which:
Figure 1 is a block diagram of an exemplary underground structure inspection system;
Figure 2 is a block diagram of an exemplary image capture apparatus of an exemplary underground structure inspection system;
Figure 3 is a side plan view of an exemplary image capture apparatus of an exemplary underground structure inspection system;
Figure 4 is a view of a display of an exemplary user terminal of an exemplary underground structure inspection system, and
Figure 5 is a flowchart of an exemplary method of inspecting an underground structure.

In the drawings, corresponding reference characters indicate corresponding components. The skilled person will appreciate that elements in the figures are illustrated for simplicity and clarity and have not necessarily been drawn to scale. For example, the dimensions of some of the elements in the figures may be exaggerated relative to other elements to help to improve understanding of various example embodiments. Also, common but well-understood elements that are useful or necessary in a commercially feasible embodiment are often not depicted in order to facilitate a less obstructed view of these various example embodiments.

### DETAILED DESCRIPTION

At least some of the following exemplary embodiments provide an improved system and method suitable for inspecting an underground structure. Many other advantages and improvements will be discussed in more detail below, or will be appreciated by the skilled person from carrying out exemplary embodiments based on the teachings herein.

In the following description, numerous specific details are set forth in order to provide a thorough understanding of the present invention. It will be apparent, however, to one having ordinary skill in the art that the specific detail need not be employed to practice the present invention. In other instances, well-known materials or methods have not been described in detail in order to avoid obscuring the present invention.

Reference throughout this specification to "one embodiment", "an embodiment", "one example" or "an example" means that a particular feature, structure or characteristic described in connection with the embodiment or example is included in at least one embodiment of the present invention. Thus, appearances of the phrases "in one embodiment", "in an embodiment", "one example" or "an example" in various places throughout this specification are not necessarily all referring to the same embodiment or example. Furthermore, the particular features, structures or characteristics may be combined in any suitable combinations and/or sub-combinations in one or more embodiments or examples. In addition, it is appreciated that the figures provided herewith are for explanation purposes to persons ordinarily skilled in the art and that the drawings are not necessarily drawn to scale.

Embodiments in accordance with the present invention may be embodied as an apparatus, method, or computer program product. Accordingly, the present invention may take the form of an entirely hardware embodiment, an entirely software embodiment (including firmware, resident software, micro-code, etc.), or an embodiment combining software and hardware aspects that may all generally be referred to herein as a "module" or "system." Furthermore, the present invention may take the form of a computer program product embodied in any tangible medium of expression having computer-usable program code embodied in the medium.

Any combination of one or more computer-usable or computer-readable media may be utilized. For example, a computer-readable medium may include one or more of a portable computer diskette, a hard disk, a random access memory (RAM) device, a read-only memory (ROM) device, an erasable programmable read-only memory (EPROM or Flash memory) device, a portable compact disc read-only memory (CDROM), an optical storage device, and a magnetic storage device. Computer program code for carrying out operations of the present invention may be written in any combination of one or more programming languages.

The flowchart and block diagrams in the flow diagrams illustrate the architecture, functionality, and operation of possible implementations of systems, methods, and computer program products according to various embodiments of the present invention. In this regard, each block in the flowchart or block diagrams may represent a module, segment, or portion of code, which comprises one or more executable instructions for implementing the specified logical function(s). It will also be noted that each block of the block diagrams and/or flowchart illustrations, and combinations of blocks in the block diagrams and/or flowchart illustrations, may be implemented by special purpose hardware-based systems that perform the specified functions or acts, or combinations of special purpose hardware and computer instructions. These computer program instructions may also be stored in a computer-readable medium that can direct a computer or other programmable data processing apparatus to function in a particular manner, such that the instructions stored in the computer-readable medium produce an article of manufacture including instruction means which implement the function/act specified in the flowchart and/or block diagram block or blocks.

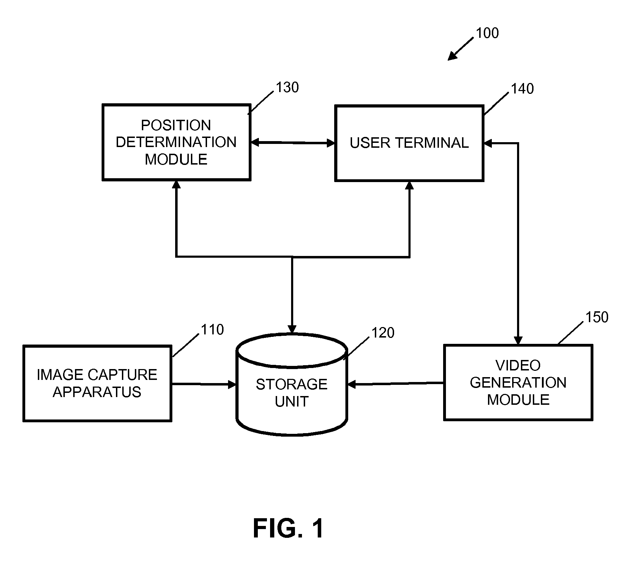

Figure 1 shows a schematic block diagram of an example underground structure inspection system 100. In one example, the system 100 comprises an image capture apparatus 110, a storage unit 120, a position determination module 130, a video generation module 150 and a user terminal 140.

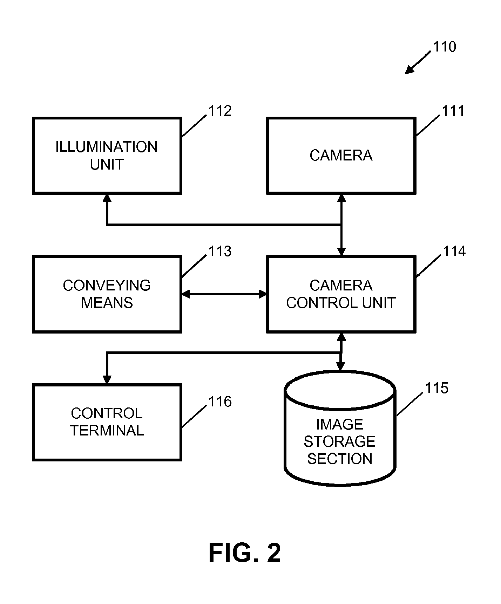

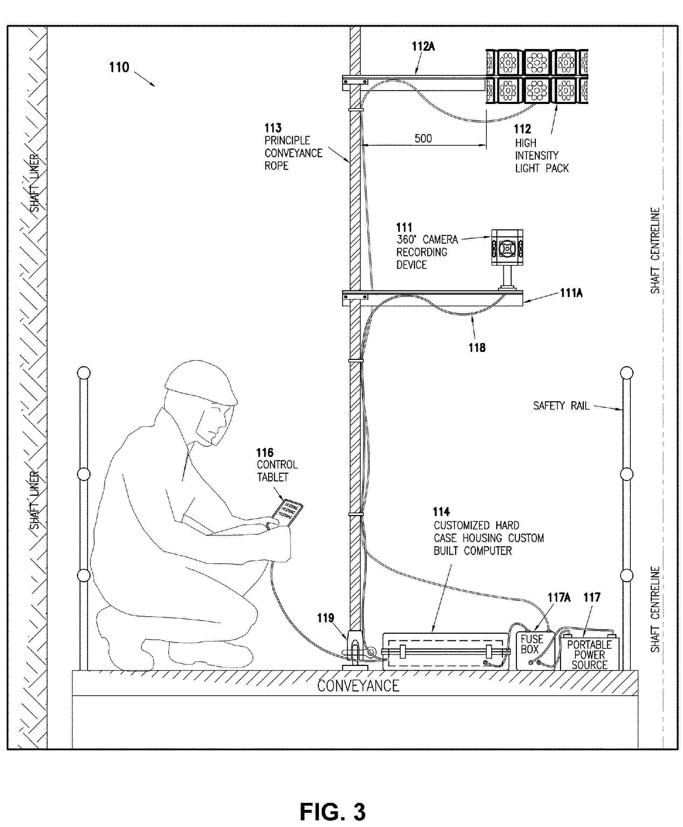

The image capture apparatus 110 is configured to capture images of an underground structure. The image capture apparatus 110 captures the images whilst moving along a predetermined path through the underground structure. An example image capture apparatus 110 will be described below in more detail with reference to Figures 2 and 3.

Figure 2 shows a schematic block diagram of the image capture apparatus 110, which comprises a camera 111, an illumination unit 112, a conveying means 113, a camera control unit 114 and an image storage section 115. Figure 3 shows a side plan view of the image capture apparatus 110 in position.

The camera 111 is configured to capture the images of the underground structure. In one example, the camera 111 is a 360° camera, arranged to capture 360° images of the underground structure. In one example, the camera 111 comprises several lenses, arranged radially around a central axis of the camera in order to capture the 360° image. In further examples, the camera 111 comprises separate cameras, each of which takes an image from a different viewpoint. The resulting images may then be joined together to give a 360° image. In still further examples, the camera 111 is arranged to rotate about an axis so as to capture a 360° image.

The camera is configured to capture high quality images, so as to allow for detailed inspection. The camera is configured to capture images at predetermined time intervals. In one particular example, the camera is configured to capture images up to 15 times per second.

The illumination unit 112 is configured to illuminate the underground structure, so as to enable the capture of high quality images by the camera 111. The illumination unit comprises a plurality of light sources, arranged to illuminate the portions of the underground structure in range of the camera 111. In one example, the illumination unit 112 comprises two rings of LED floodlights, attached to a central mounting portion. The ring-shaped arrangement of LED floodlights allows the illumination unit 112 to emit light in 360°, so as to uniformly light the underground structure during image capture. The illumination unit 112 may be positioned above the camera 111 in use, thereby providing some protection to the camera 111 from any falling water encountered during the inspection.

Both the camera 111 and the illumination unit 112 are attached to respective mounting portions 111A and 112A, which are in turn connected to the conveying means 113. In one example the mounting portions 111A and 112A are aluminium bars connected to one or more rope clamps. It will be understood that a single mounting portion could instead be employed to mount both the camera 111 and the illumination unit 112 to the conveying means 113. The camera 111 and the illumination unit 112 are attached to the conveying means 113 such that the distance therebetween remains constant during conveying. Accordingly, the lighting conditions remain consistent during image capture. The conveying means 113 is configured to convey the camera 111 and illumination unit 112 along the predetermined path through the underground structure whilst capturing images.

In one example, the conveying means 113 comprises a conveying line, disposed in the underground structure and attached to suitable means for moving the line (e.g. a motor). The conveying means 113 may be fixed in position by one or more mounting portions 119 connected to a surface of the underground structure. When the line is moved, the camera 111 and the illumination unit 112 are moved through the structure. The camera 111 and illumination unit 112 move in unison when the conveying line is moved.

In one example, the conveying line is a conveyance or hoist rope. Such conveyance or hoist ropes are often already disposed in a typical mine shaft, though it will be understood that a conveyance or hoist rope could instead be specially installed in the underground structure for the purpose of image capture. The conveyance or hoist rope may manufactured of steel wires, spun together so as to lock under load. In one example, the conveyance or hoist rope is part of a drum hoist system or a friction hoist system. It will be understood that other hoist mechanisms may be employed, and the embodiments described herein are not dependent on any particular hoist mechanism. The use of the conveying line as the conveying means 113 allows for rapid assembly and disassembly of the image capture apparatus 110.

The conveying means 113 may be offset from a central axis of the underground structure, with the mounting portions 111A and 112A configured to dispose the camera 111 and illumination unit 112 in a position near the central axis of the structure.

Though the conveying means 113 shown in Figure 3 is intended to convey the camera 111 in a substantially vertical direction, it will be understood by those skilled in the art that the camera 111 and conveying means 113 may be arranged to capture images in substantially horizontally aligned structures, or structures of other configurations.

In a further example, the conveying means 113 instead comprises a vehicle, arranged to move on wheels or on rails along the predetermined path, with the camera 111 and the illumination unit 112 attached thereto. In other examples, the conveying means 113 comprises a remote-controlled flying drone with the camera 111 and the illumination unit 112 attached thereto. The drone is controlled remotely so as to travel along the predetermined path.

In one example, the image capture apparatus 110 may comprise a position measurement sensor (not shown). The distance measurement sensor is configured to detect a position of the camera 111 on the predetermined path.

The camera control unit 114 controls the operation of the image capture apparatus 110, and is operable to receive captured images from the camera 111 and store the received images in the image storage section 115. In one example, the camera control unit 114 is a custom designed computer encased in a waterproof housing. In one example, the camera control unit 114 and image storage section 115 may be a single unit. The image storage section 115 may be removably mounted in the camera control unit 114, so that the captured images can be easily accessed. The camera control unit 114 is connected to the camera 111 by suitable waterproof cabling 118. In one example, the camera control unit 114 is further configured to control the speed at which the camera 111 and the illumination unit 112 are conveyed by the conveying means 113.

The image capture apparatus 110 is powered by a power supply 117. The power supply 117 is of sufficient size to provide power for the full duration of the image capture process. In one example, the power supply 117 comprises a 12V deep cycle battery designed to be regularly deeply discharged by using most of its capacity. The battery is able to provide up to 105Ah so as to give a run time of approximately 4 hours. The power supply may further comprise a watertight fuse box 117A configured to isolate the illumination unit 112 and the camera control unit 114.

In one example, the camera control unit 114 is connected to a control terminal 116. The control terminal 116 provides a user interface to the camera control unit 114, allowing a user 10 to control the operation of the image capture apparatus 110. This arrangement allows the control terminal 116 to remain sealed and watertight during operation. The user 10 may set suitable parameters for the operation of the image capture apparatus 110 using the control terminal 116. For example, the user 10 may specify the number of frames per second to be captured, the length of exposure of each image, and so on. In one example, the control terminal 116 is a tablet computer installed in a waterproof case.

Returning to Figure 1, the storage unit 120 of the underground structure inspection system 100 may be any suitable computer storage device, such as a hard disk drive, a solid state drive, an optical disk or a flash storage device. The storage unit 120 is configured to store the images captured by the image capture apparatus 110. In the example in which the image storage section 115 is a removable storage device, the storage unit 120 and the image storage section 115 may be the same physical storage device. In one example, the storage unit 120 is further configured to store position data generated by the position determination module 130.

In one example, the storage unit 120 is configured to store an electronically generated inspection log. The log includes a plurality of relevant items of inspection data, including but not limited to drawings, maintenance records, images of previous inspections and other relevant information related to the underground structure. The storage unit 120 is configured to store position data for each of the items of inspection data. Accordingly, for each stored image, any associated inspection data can be easily retrieved based on the position data of the image and the position data of the inspection data.

In one example, the storage unit 120 is further configured to store at least one video generated by the video generation module 150. The storage unit 120 is further configured to store any other data necessary for the functioning of the system 100.

The position determination module 130 generates position data, which links the captured images to their respective position on the predetermined path. The generated position data is then stored in the storage 120.

In one example, the position data is generated by manual visual inspection of the images. A user views a captured image, identifies a position marker shown therein and records the position associated with the captured image. The position determination module may provide a suitable user interface for the input of the position. The association between position and image may be stored in tabular form, e.g. in a database or spreadsheet. The position may be expressed as a distance from the start of the predetermined path though the underground structure. In one example, the plurality of position markers are disposed in the underground structure along the predetermined path, in order to provide indicative reference distances in the captured images. The position markers may be disposed at predetermined intervals, for example every 30m. In one example, the position markers are steel tapes hung from a wall of the underground structure.

In a further example, the position data is generated automatically by a distance measurement tool. For example, the image capture apparatus 110 may comprise a sensor (not shown) which measures the distance travelled along the determined path. The position determination module 130 may be configured to associate each captured image with the measured distance.

In one example, the position data may be generated for a subset of the captured images, referred to hereinafter as key images, rather than for all of the captured images. The position data of the remaining captured images may then be extrapolated based on the position data of the key images. Particularly, the position data of successively captured pairs of key images may be used to extrapolate the position data of any of the remaining images captured therebetween. In one example, the extrapolation may be based on the speed at which the image capture apparatus 110 travelled through the underground structure whilst capturing the images and the time of capture of the remaining captured images. Because the position data of the preceding key image is known, the speed of travel is known and the time of capture of each of the remaining images is known, the distance from the preceding key image can be straightforwardly calculated for each of the remaining images. Consequently, the position data for each of the remaining images can be generated from the position data of the preceding key image and the distance travelled therefrom at time of capture.

The video generation module 150 is configured to generate a video from the captured images stored in the storage 120, and store the generated video in the storage 120. In examples where the image capture apparatus 110 captures several images simultaneously from different lenses, the video processing module is configured to combine the simultaneously captured images into a single 360° image. In one example, the video generation module 150 is configured to combine a plurality of captured images to produce a video.

In one example, the generated video is an interactive video, in which the viewpoint may be moved during playback. The interactive video may be generated by stretching the captured images over an imaginary dome-like surface using a video processing algorithm.

The user terminal 140 may be any suitable computing device which is configured to display information to a user and receive input from a user via one or more interfaces. In one example, the user terminal 140 is a personal computer comprising at least one screen to display information and at least one of a mouse and keyboard to receive input from a user. In one example, the user terminal 140 may be a tablet computer comprising a screen which displays information and receives touch-screen input from a user.

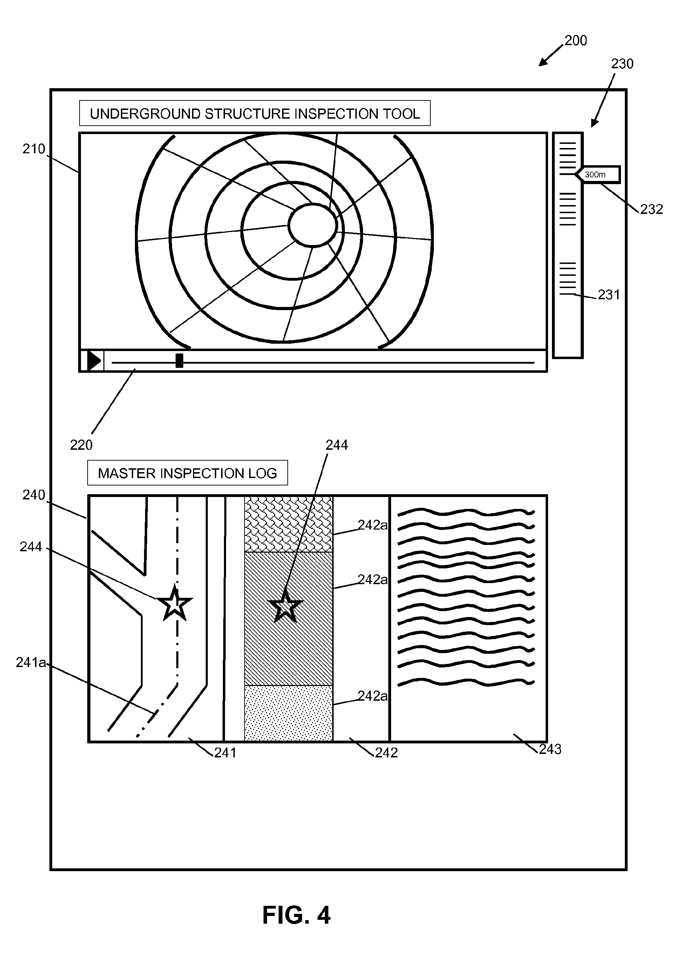

The user terminal 140 further comprises inspection software 200, configured to allow a user to inspect the captured images of the underground structure. Figure 4 shows an exemplary display of the user terminal 140 running the inspection software 200. In one example, the inspection software 200 comprises an image viewing pane 210, a time selection means 220, a distance selection means 230 and an inspection log display pane 240.

The image viewing pane 210 is operable to retrieve and display the images of the underground structure. In one example, the 360 degree captured images are be displayed as an interactive image, in which the viewpoint of may be changed based on user input. For example, the user may click and drag in the image viewing pane to alter the viewpoint. In one example, the 360 degree captured images are displayed in an unrolled mode, in which they are shown as flattened images. A suitable input means, such as a button (not shown), may be provided to switch between the interactive image mode and the unrolled mode. In still further examples, the image viewing pane is configured to display both an image in interactive mode and an image in unrolled mode side-by-side. In further examples, suitable input means are provided which enable a user to zoom into a portion of the image viewing pane 210, capture a screenshot of the contents of the image viewing pane 210, and/or to expand the image viewing pane 210 into a full-screen mode.

In one example, the image display pane 210 of the inspection software 200 is further configured to retrieve and display the video generated from the captured images, instead of or in addition to the captured images. In the examples where the generated video is an interactive video, the software 200 is operable to change the viewpoint of the user in the interactive video based on user input. For example, the user may click and drag in the display pane 210 to alter the viewpoint.

The time selection means 220 allows the user to display a captured image in the image display pane 210 based on the time elapsed between the beginning of the image capture process and the time of capture of the image. In the examples where the image display pane 210 displays a generated video, the time selection means 220 allows the user to skip to the selected time index in the video. For example, the user may drag a bar of the time selection means to a desired time index, so as to display the image captured at that time. In further examples, input buttons are provided to enable control of the video, including operations such as play, pause, stop, fast forward, rewind, rewind 10 seconds and so on.

The distance selection means 230 allows the user to display an image based on the distance of the image from the start of the predetermined path. In one example, the distance selection means 230 comprises a vertical bar intended to represent the relative distance from the beginning of the predetermined path at which the image was captured. User input (e.g. a mouse click or touch-screen press) in the bar causes the software to retrieve and display the captured image associated with that distance, based on the stored position data. The distance selection means 230 may also comprise one or more distance markers 231, associated with important locations within the underground structure. In one example, the distance markers 231 may also correspond to the key images. In one example, the distance selection means 230 further comprises a distance display 232, which indicates the relative distance from the beginning of the predetermined path associated with the image displayed in the image viewing pane 210.

The inspection log display pane 240 is configured to display the stored electronically generated inspection log. Particularly, the inspection log display pane 240 is configured to display the items of inspection data stored in the storage unit 120, including to drawings, maintenance records, images of previous inspections and other relevant information related to the underground structure.

In the example shown in Figure 4, the inspection log display pane 240 comprises a plan 241 of the underground structure, a geological representation 242 showing the geology of the underground structure 242, and a text pane 243. In one example, the plan 241 includes a path line 241a, which corresponds to the predetermined path the image capture apparatus 110 followed through the underground structure. The geological representation 242 may graphically indicate the geological composition of the underground structure, for example with different sections 242a. The text pane 243 is configured to show any relevant textual information, including reports, surveyor's notes and comments, maintenance records and so on.

In one example, the inspection log display pane 240 is configured to display items of inspection data which correspond in position to the image displayed on the image viewing pane 210. Particularly, each item of inspection data is stored with associated position data, and the software 200 is configured to retrieve and display items with position data corresponding to the position data of the captured image shown on the image viewing pane 210. In further examples, items of inspection data which have position data within a given range of the position data of the currently displayed image are retrieved and displayed.

In one example, the inspection log display pane 240 is configured to show position markers 244, which indicate the position of the image displayed on the image viewing pane 210 on the plan 241 and geological representation 242. In one example, the position markers 244 may be moved to a new position by a user, and the image displayed on the image viewing pane 210 updated to display an image corresponding to the new position.

In examples in which the image display pane 210 shows the generated video, the inspection log display pane 240 may be configured to automatically update to show items of inspection data corresponding to the frame of the video currently being displayed.

In one example, the text pane 243 may be configured to allow the editing of the text shown therein, or the creation of new inspection data. The software 200 is configured to store the created or edited inspection data in the storage unit 120.

Although Figure 4 shows the inspection log display pane 240 below the image display pane 210, it will be understood that alternative layouts could be employed. For example, image display pane 210 and inspection log display pane 240 could be shown side-by-side. In examples where the user terminal 140 comprises more than one screen, the respective panes could be shown on different screens. Alternatively, the software 200 may be configured to show only one of the two panes at once, and the display may include a button to switch therebetween.

In use, the image capture apparatus 110 is installed in an underground structure which is to be inspected, ready to be conveyed through the underground structure whilst capturing images. In the examples in which the position determination module 130 relies on position markers, the position markers are also installed in the underground structure before operation of the image capture apparatus 110.

Next, the image capture apparatus 110 is conveyed through the underground structure, along a predetermined path corresponding to the area to be inspected. Whilst being conveyed, the camera 111 of the image capture apparatus 110 frequently captures images of the underground structure. In one example, the images are 360° images captured at a rate of 15 images per second. The captured images are stored in the image storage 115 of the image capture apparatus 110.

Optionally, after successful image capture, the image capture apparatus 110 may be uninstalled and removed from the underground structure.

Next, the captured images are transferred from the image storage 115 to the storage 120 of the underground structure inspection system.

Next, the position determination module 130 generates position data for each of the captured images stored in the storage 120. In one example, a user inputs position data for a subset of the images - i.e. key images - by inspecting the images for position markers. The position data for the remaining images is then generated by extrapolation based on the speed at which the image capture apparatus 110 was conveyed and/or the time elapsed between the beginning of the image capture process and the time at which the image was captured. In other examples, the position data is generated based on sensor data recorded by the image capture apparatus 110.

Next, the position determination module 130 stores the generated position data in the storage 120.

Optionally, the video generation module 150 generates a video from the captured images.

When a user wishes to inspect the underground structure, the user opens the inspection software 200 on the user terminal 140. The inspection software 200 is able to access the captured images and the position data stored on the storage 120.

In an example where the user wishes to view images captured at a certain distance along the predetermined path (e.g. a given depth when the underground structure is a vertical shaft), the user selects a distance using the distance selection means 230. The inspection software 200 searches the stored position data, which indicates a captured image associated with that distance. The captured image is then retrieved and displayed in the image viewing pane 210. Accordingly, the user may intuitively retrieve and inspect images of the underground structure, based on the position at which the image was captured therein. Alternatively or additionally, the user may inspect the video of underground structure. The user may alter the viewpoint as the video is playing, so as to view different aspects of the underground structure, thereby facilitating a thorough inspection of the structure.

Additionally, the electronic inspection log is displayed in the inspection log display pane 240. Particularly, items of relevant inspection data from the electronic inspection log which correspond to the position of the image displayed in the image viewing pane 210 are retrieved and displayed in the inspection log display pane 240. Accordingly, the user may concurrently view relevant stored information required for the inspection and assessment of the underground structure. In examples where the items of relevant inspection data comprise images from past inspections, the user may easily compare the captured images with previously captured images of the underground structure. The inspection software 200 may also provide an interface which allows the editing of the items of inspection data and/or addition of new items of inspection data.

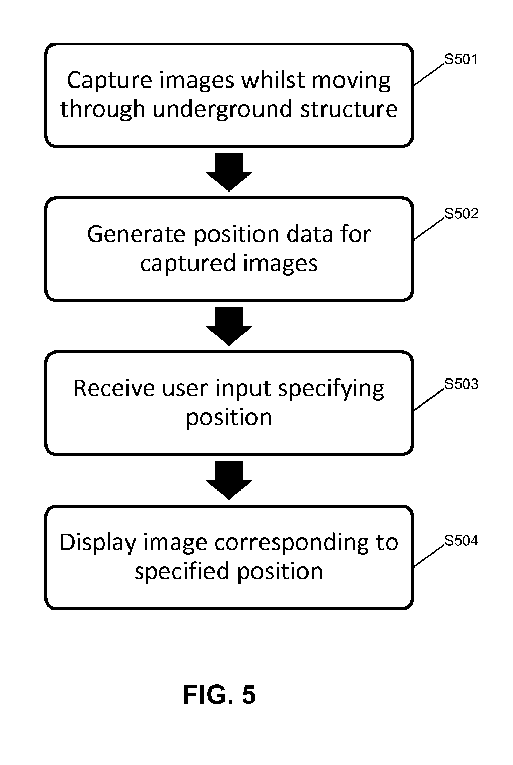

Figure 5 is a schematic flowchart of an example method. The method includes the step 501 of capturing a plurality of images whilst moving along a predetermined path through the underground structure, using the image capture apparatus 110. The method includes the step 502 of generating position data for each of the captured images using the position generation module 130, the position data comprising the position on the predetermined path at which each respective image was captured. The method includes the step 503 of receiving, by the user terminal 150, user input specifying a position on the predetermined path. The method includes the step of displaying, by the user terminal 150, at least one stored image corresponding to the specified position. Further steps may be included in the method, as have been described herein.

The above-described systems and methods may advantageously facilitate the reliable and repeatable inspection of complex underground structures. By using these systems and methods, accurate, high-quality images of the state of the structure may be captured and inspected at a later time. Consequently, the time spent by surveyors in the inhospitable environments associated with typical underground structures is minimised.

Furthermore, the above-described systems and methods may allow for the inspections of portions of underground structures which would ordinarily be impossible to inspect manually, for example because the structure is a mine associated with radioactive materials, or the spaces are too small for a human surveyor to enter.

In addition, the above-described systems and methods may provide an intuitive, easy-to-operate interface for analysing the captured images of the underground structure. The high quality images allow the user to accurately assess the state of the underground structure. Furthermore, the interface may advantageously allow the user to easily navigate the captured images according to the depth or distance at which the images were captured.

Advantageously, the interactive electronic inspection log is displayed alongside the captured images, allowing for comparison with previously captured information and images, and the update of the inspection log with information from the captured images. This allows multiple inspections to be made over time with the results updated into the master inspection log by the user.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A system (100) for inspecting an underground structure, comprising:
a memory (120) configured to store a plurality of images captured whilst moving along a predetermined path through the underground structure;
a position determination module (130) configured to generate position data associating each of the stored images with a position on the predetermined path, and
a user terminal (140) configured to receive a user input specifying a position on the predetermined path and to display at least one of the stored images corresponding to the specified position based on the position data.

2. The system of claim 1, further comprising an image capture apparatus (110) configured to capture the plurality of images whilst moving along a predetermined path through the underground structure.

3. The system of claim 2, wherein the image capture apparatus (110) comprises a camera (111) configured to capture the images and an illumination unit (112) configured to illuminate the underground structure.

4. The system of claim 2 or 3, wherein the image capture apparatus (110) comprises a conveying means (113) configured to convey the image capture apparatus (110) along the predetermined path.

5. The system of claim 4, wherein the conveying means (113) comprises a conveying line and at least one mounting portion (111A), and
wherein the or each mounting portion (111A) is arranged to attach the camera (111) and the illumination unit (112) to the line, so that they travel in unison.

6. The system of any preceding claim, wherein the position determination module (130) is configured to generate position data by user inspection of the images.

7. The system of any of claims 1 to 5, wherein the position determination module (130) is configured to generate the position data using a sensor configured to measure a distance which the image capture apparatus (110) has travelled along the predetermined path.

8. The system of any preceding claim, wherein the position determination module (130) is configured to generate position data for a subset of the captured images, and to extrapolate position data for a remainder of the captured images based on the position data of the subset of the captured images.

9. The system of any preceding claim, wherein the memory (120) is configured to store a plurality of items of inspection data, the inspection data comprising images and/or information relevant to the inspection of the underground structure, and
wherein the user terminal (140) is configured to display at least one of the plurality of items of inspection data.

10. The system of claim 9, wherein the memory (120) is configured to store inspection position data associating each item of inspection data with its respective position on the predetermined path, and the user terminal (140) is configured to display one or more items of inspection data corresponding to the specified position.

11. The system of any preceding claim, further comprising a video generation module (150), configured to generate a video from the stored images and store the generated video in the memory (120).

12. A method of inspecting an underground structure, comprising:
generating position data for each of a plurality of stored images captured along a predetermined path through the underground structure, the position data comprising the position on the predetermined path at which each respective image was captured;
receiving a user input specifying a position on the predetermined path, and
displaying at least one stored image corresponding to the specified position based on the position data.

13. The method of claim 12, further comprising:
storing a plurality of items of inspection data, the inspection data comprising images and/or information relevant to the inspection of the underground structure;
storing inspection position data associating each item of inspection data with its respective position on the predetermined path, and
displaying at least one of the plurality of items of inspection data corresponding to the specified position.

14. The method of claim 12 or 13, further comprising:
capturing the plurality of images along the predetermined path through the underground structure.

15. A computer-readable storage media having computer-executable components which when executed cause a computing device to perform the method of any of claims 12 to 14.
